# EUROPÄISCHE PATENTSCHRIFT

(11) **EP 3 000 581 B1**
(45) Veröffentlichungstag und Bekanntmachung des Hinweises auf die Patenterteilung: **20.11.2019**
(21) Anmeldenummer: 15002550.0
(22) Anmeldetag: 28.08.2015
(51) Int. Cl.: B29C 45/27, B29C 45/28, B29C 45/82

(54) **ANORDNUNG ZUM EINSPRITZEN VON FLÜSSIGEM KUNSTSTOFFMATERIAL IN EINE SPRITZGUSSFORM EINER KUNSTSTOFFSPRITZGUSSMASCHINE**
ASSEMBLY FOR INJECTING LIQUID PLASTIC MATERIAL INTO AN INJECTION MOLD OF A PLASTICS INJECTION-MOULDING MACHINE
SYSTEME D'INJECTION DE MATERIAU SYNTHETIQUE LIQUIDE DANS UN MOULE A INJECTION D'UNE MACHINE DE MOULAGE PAR INJECTION PLASTIQUE

(30) Priorität: 24.09.2014 DE 102014013865
(43) Veröffentlichungstag der Anmeldung: 30.03.2016
(73) Patentinhaber: PSG Plastic Service GmbH, 68309 Mannheim (DE)
(72) Erfinder: Hoffmann, Horst, 64658 Erlenbach (DE)
(74) Vertreter: Kesselhut, Wolf

(56) Entgegenhaltungen:
- EP-A1- 0 117 510
- DE-A1-102010 047 953
- US-A- 3 037 245
- US-A- 4 173 448
- US-B1- 6 554 604
- Anonymous: "Komplettkonzepte für den Heißkanal, Form-Werkzeug.de", Form+Werkzeug, 5. September 2014 (2014-09-05), Seiten 1-2, XP055244630, Gefunden im Internet: URL:https://www.form-werkzeug.de/produkte/ uebersicht/beitrag/komplettkonzepte-fuer-d en-heisskanal-psg-pipeline-smartfill-und-f ox-70-914104.html [gefunden am 2016-01-25]

## Beschreibung

Die Erfindung betrifft eine Anordnung zum Einspritzen von flüssigem Kunststoffmaterial in eine Spritzgussform einer Kunststoffspritzgussmaschine gemäß dem Oberbegriff von Anspruch 1.

Auf dem Gebiet der Kunststoffverarbeitung werden zur Herstellung von Kunststoffformteilen Nadelverschlussdüsen eingesetzt, mit denen über einen Schmelzgut-Verteiler zugeführter, durch Erhitzen verflüssigter Kunststoff durch eine Aufspannplatte hindurch in eine Spritzgussform injiziert wird, aus der das Formteil nach dem Erstarren des Kunststoffs entnommen werden kann.

Derartige Nadelverschlussdüsen werden gewöhnlich mit einer der jeweiligen Nadelverschlussdüse zugeordneten hydraulischen Betätigungseinheit geöffnet oder geschlossen. Hierbei wird die Verschlussnadel einer jeden Nadelverschlussdüse bekanntermaßen durch einen in einem Zylinder der Betätigungseinheit angeordneten doppeltwirkenden Kolben entlang der zur Achse der Verschlussnadel fluchtenden oder parallelen Zylinderachse bewegt.

Zur Bewegung des Kolbens werden die beiden durch den Kolben getrennten Zylinderkammern des Zylinders bekanntermaßen mit einem Druckfluid - in der Regel Hydraulikflüssigkeit - beaufschlagt, welches über eine jeweilige Druckfluidleitung von einer zentralen Ventil- und Verteilerkonsole zugeführt wird. Diese Druckfluidleitungen müssen dabei mit großem Aufwand in hierzu vorgesehenen Ausfräsungen in der Aufspannplatte verlegt und mit der im Randbereich der Aufspannplatte angeordneten Ventil- und Verteilerkonsole verbunden werden.

Weiterhin ist es bekannt, dass die innerhalb der Ausnehmungen in der Aufspannplatte angeordneten Betätigungseinheiten der sogenannten "heißen Seite" eines Spritzgusswerkzeugs Temperaturen von mehreren hundert Grad Celsius ausgesetzt sind und die Gehäuse der Betätigungseinheiten zur Verminderung von thermisch bedingten Ausdehnungen gekühlt werden müssen.

Aus dem Stand der Technik ist es ferner bekannt, die Betätigungseinheiten mit einer Kühlplatte zu versehen, die jeweils über eine angeschlossene Kühlfluid-Vorlaufleitung, und eine Kühlfluid-Rücklaufleitung mit einer im Randbereich der Aufspannplatte angeordneten Kühlfluid-Verteilerkonsole verbunden ist. Hierzu bedarf es - in gleicher Weise wie bei den zuvor erwähnten Druckfluidleitungen - weiterer Aussparungen in der Aufspannplatte, um die Verrohrung für die Kühlkreisläufe der Betätigungseinheiten insbesondere in den Kreuzungsbereichen kollisionsfrei zu führen. Demgemäß werden bei den Vorrichtungen des Standes der Technik je Betätigungseinheit insgesamt vier Versorgungsleitungen für den Kühlkreislauf und das Druckfluid benötigt, die an einer entsprechenden Anzahl von Kreuzungspunkten in entsprechenden Ausfräsungen in der Aufspannplatte verlegt werden müssen. Da bei den heutzutage eingesetzten Spritzgussmaschinen beispielsweise 10 oder mehr Betätigungseinheiten pro Spritzgussform gleichzeitig zum Einsatz gelangen, wird eine entsprechende Anzahl von Ausfräsungen in der Aufspannplatte benötigt, die die Steifigkeit der hochbelasteten Aufspannplatte in erheblichem Maße schwächen. Um dennoch beim Betreiben einer Spritzgussmaschine die beiden Formteile der Spritgussmaschine mit einem Druck von mehreren Tonnen zusammen pressen zu können, der über die Aufspannplatte in die Spritzgussform eingeleitet wird, ist es zur Gewährleistung einer hohen Qualität der Spritzgussteile wünschenswert, die Anzahl sowie auch die Tiefe der Ausfräsungen soweit wie möglich zu reduzieren.

Aus der DE 10 2010 047 953A1 ist es zur Lösung des zuvor genannten Problems bekannt, die Betätigungseinheiten zum Betätigen der Nadelverschlussdüsen über eine umlaufende Zu- und Rücklaufleitung aus einem zentralen Vorratsbehälter mit Hydraulikflüssigkeit zu versorgen, wobei die Ansteuerung der jeweiligen Betätigungseinheit über ein zugeordnetes elektrisch betätigtes hydraulisches Mehrwegeventil erfolgt, welches zusammen mit der jeweiligen Betätigungseinheit und den Zu- und Rücklaufleitungen in dem Hohlraum zwischen dem Heißkanal und der Aufspannplatte angeordnet ist. Die Versorgung der Betätigungseinheit erfolgt dabei über Zuleitungen, die mittels T-Röhrchen an die Ringleitung für die zu- und abgeführte Hydraulikflüssigkeit angeschlossen sind. Da es für einen leckagefreien Anschluss der Zuleitungen an die Ringleitungen aufgrund der erforderlichen Leitungsquerschnitte der Ringleitungen erforderlich ist, Überwurfmuttern mit einer Schlüsselweite von wenigstens 19 mm zu verwenden und zudem die jeweiligen Leitungsabschnitte der Ringleitungen zusammen mit den Betätigungseinheiten und den elektrischen Ventilen im selben Hohlraum der Aufspannplatte angeordnet sind, ergibt sich bei der Anordnung nach der DE 10 2010 047 953A1 eine räumlich stark beengte Bauweise, die hinsichtlich der Leitungsführung lediglich geringe Variationsmöglichkeiten bietet. Zudem ist es aufgrund der beengten Platzverhältnisse im Falle von Undichtigkeiten an den Anschlussstücken zwischen den Zuleitungen zu den Ventilen und den Ringleitungen nur mit großem Aufwand möglich, die entsprechenden Leitungsabschnitte und Anschlussstücke mit einem entsprechenden Werkzeug zu erreichen, da diese in der Regel durch die übrigen Komponenten verdeckt sind.

In einem Artikel "Komplettkonzepte für den Heißkanal", www.form-werkzeug.de, Form + Werkzeug, vom 05.09.2014 ist ein Heißkanalsystem mit mehr als vier Betätigungseinheiten zum Einspritzen von flüssigem Kunststoffmaterial in eine Spritzgussform zu dem Heißkanalsystem beschrieben, durch den sich der Vorteil einer Reduktion der Rohrleitungszeit, eine erhöhte Stabilität der Formplatte, ein verzögerungsfreies Schalten der Nadeln und das Wegfallen der Wasserkühlung ergibt. Zu dem Heißkanalsystem selbst sind dem Dokument keine konkreten Einzelheiten zu entnehmen.

Weiterhin beschreibt die US 6,554,604 B1 ein Heißkanalverteilersystem, bei welchem die Betätigungseinheiten einschließlich der Ventile oberhalb des Heißkanalverteilers zum Verteilen des flüssigen Schmelzgutes angeordnet sind. Der Heißkanalverteiler ist hierbei lediglich durch einen sehr schmalen Spalt getrennt von der Formplatte der Spritzgussform angeordnet, in welchem ein Führen von Druckfluidleitungen zum Betätigen der Betätigungseinrichtungen für die Verschlussnadeln aufgrund der geringen Spaltbreite nicht möglich ist.

Demgemäß ist es eine Aufgabe der vorliegenden Erfindung, eine Anordnung zum Einspritzen von flüssigem Kunststoffmaterial in die Spritzgussform einer Spritzgussmaschine zu schaffen, welche einen guten Zugang zu den Leitungsabschnitten bietet und zudem eine modulare und flexible Leitungsführung ermöglicht.

Diese Aufgabe wird erfindungsgemäß durch eine Anordnung mit den Merkmalen von Anspruch 1 gelöst.

Weitere Merkmale der Erfindung sind in den Unteransprüchen beschrieben.

Gemäß der Erfindung umfasst eine Anordnung zum Einspritzen von flüssigem Kunststoffmaterial in eine Spritzgussform einer Kunststoffspritzgussmaschine eine Aufspannplatte, an der mehrere von durch jeweilige Betätigungseinheiten hydraulisch betätigbaren Nadelverschlussdüsen angeordnet sind. Die Nadelverschlussdüsen, denen das flüssige Kunststoffmaterial in bekannter Weise über einen Heißkanalverteiler zugeführt wird, sind über zugeordnete elektrisch betätigte Mehrwegeventile aktivierbar, um das erhitzte und dadurch verflüssigte Kunststoffmaterial in die Spritzgussform zu injizieren, welche einen mit der Aufspannplatte ggf. über eine Zwischenplatte verbundenen festen Teil sowie einen von diesem ablösbaren beweglichen Teil besitzt. Die Zulaufleitungen, über die das Druckfluid - bei dem es sich vorzugsweise um bekanntes Hydrauliköl handelt - zu den jeweiligen Ventilen zugeführt wird, sind über eine gemeinsame Zulauf-Sammelleitung mit einer Druckfluidquelle, die vorzugsweise eine elektrisch betriebene Hydraulikpumpe umfasst verbunden. In entsprechender Weise sind die Rücklaufleitungen, über die das Druckfluid mit einem lediglich geringen Druck von den Ventilen abgeführt wird, über eine gemeinsame Rücklauf-Sammelleitung mit einem Vorratsbehälter für das Druckfluid verbunden, aus welchem die Hydraulikpumpe das Druckfluid vorzugsweise wieder absaugt, um dies erneut den Ventilen mit hohem Druck zuzuführen.

Die erfindungsgemäße Anordnung zeichnet sich dadurch aus, dass die gemeinsame Zulauf-Sammelleitung und Rücklauf-Sammelleitung eine der Anzahl der Betätigungseinheiten entsprechende Anzahl von hydraulischen Übergabeblöcken enthält, die jeweils untereinander über sich zwischen den Übergabeblöcken ersteckende Zu- und Rücklauf-Sammelleitungsabschnitte verbunden sind. Die Zu- und Rücklaufleitungen erstrecken sich dabei jeweils von den Übergabeblöcken aus zu den Ventilen, bzw. von den Ventilen aus zu den Betätigungseinheiten, wenn die Ventile an den Übergabeblöcken angeordnet sind. Der Heißkanalverteiler ist in einem Hohlraum zwischen der Aufspannplatte und einer die Spritzgussform tragenden Formplatte angeordnet. Die hydraulischen Übergabeblöcke befinden sich zwischen der Formplatte und dem Heißkanalverteiler; und die Betätigungseinheiten sind zwischen dem Heißkanalverteiler und der Aufspannplatte positioniert.

Durch die Erfindung ergibt sich der Vorteil, dass Mehrfachkupplungen entfallen können und die Leitungen als modulare Konstruktion in Form eines Baukastensystems verlegt werden können. Ein weiterer Vorteil der Erfindung besteht darin, dass es beim Einbau der Leitungen ein geringeres Kollisionsrisiko gibt, da die nach Art einer Ringleitung ausgebildeten Zu- und Rücklauf -Sammelleitungsabschnitte vorzugsweise auf der einen Seite des Heißkanalverteilers in einer Ebene verlegt werden können, wohingehen die von den Übergabeblöcken abzweigenden Leitungsabschnitte zu den Ventilen, bzw. zu den Betätigungseinheiten in einer Ebene senkrecht zu dieser verlegt werden können. Ein weiterer Vorteil besteht darin, dass die Sammelleitungsabschnitte durch flexible Hydraulikschläuche gebildet werden können. Alternativ ist es möglich, die Sammelleitungsabschnitte auf einem CAD - System individuell im Vorfeld zu planen und aus Metall mit Hilfe eines Biegeautomaten zu fertigen, so dass diese beim Zusammenbau der erfindungsgemäßen Anordnung lediglich zwischen den Übergabeblöcken eingesetzt werden müssen. Hierbei hat es sich als besonders vorteilhaft herausgestellt, dass sich die vergleichsweise kurzen Sammelleitungsabschnitte, die eine Länge von beispielsweise 10 cm bis zu 1 m besitzen können, trotz ihrer mitunter räumlich komplexen Form sehr gut zwischen zwei Übergabeblöcken positionieren lassen.

Ein weiterer Vorteil der Erfindung besteht darin, dass die Größe der Ausfräsungen in der Aufspannplatte weiter verringert werden kann, da der benötigte Zwischenraum, in welchem die Sammelleitungsabschnitte verlaufen, in dem Bereich, in welchem sich die Betätigungseinheiten befinden, entfallen kann. Hierbei wird in vorteilhafter Weise der ansonsten als Luftraum zur thermischen Isolation zwischen dem mehrere 100°C heißen Heißkanalverteiler und der gekühlten Formplatte, bzw. Spritzgussform dienende Zwischenraum zum Führen der hydraulischen Sammelleitungen genutzt.

Gemäß einer weiteren Ausführungsform der Erfindung können die elektrisch betätigten Ventile zusammen mit den Betätigungseinheiten zwischen dem Heißkanalverteiler und der Aufspannplatte angeordnet sein. Bei dieser Ausführungsform erstrecken sich die Zu- und Rücklaufleitungen von jedem Ventil aus bevorzugt durch eine Öffnung im Heißkanalverteiler hindurch zu dem jeweiligen hydraulischen Übergabeblock. Hierdurch ergeben sich zum einen kurze Leitungswege für die Zu- und Rücklaufleitungen; und zum anderen wird das Kollisionsrisiko zwischen Leitungen verringert und eine strukturierte Leitungsführung ermöglicht.

Bei der zuletzt beschriebenen Ausführungsform hat es sich in Hinblick auf eine strukturierte Leitungsführung und eine einfache Montage der Betätigungseinheiten als besonders vorteilhaft herausgestellt, wenn die Zulauf- und Rücklaufleitungen zwischen den hydraulischen Übergabeblöcken und den Ventilen als eigensteife Metallröhrchen ausgestaltet sind, welche an ihrem ventilseitigen Ende einen Anschlussadapter aufweisen, auf den eine die jeweilige Betätigungseinheit und/oder das zugehörige Ventil tragende Adapterplatte aufsteckbar ist, die mit entsprechenden Verteilerbohrungen für den Zu- und Rücklauf des Druckfluids zur Betätigungseinheit versehen ist. Die Anschlussadapter können beispielsweise als bekannte Mehrfach-Kupplungen, bzw. von Hand lösbare Schnellkupplungen ausgestaltet sein.

Um eine möglichst gleichmäßige Kühlung der Betätigungseinheiten, bzw. der Ventile zu gewährleisten, hatte sich als besonders vorteilhaft herausgestellt, wenn die Adapterplatte auf der die Betätigungseinheiten und/oder elektrisch betätigten Hydraulikventile angeordnet sind, einen die Zu- und Rücklaufleitung direkt miteinander verbindenden Bypasskanal besitzt, dessen Strömungsquerschnitt für das hindurchströmende Druckfluid durch eine einstellbare Strömungsdrossel verändert werden kann. Die Strömungsdrossel ist vorzugsweise als Madenschraube ausgestaltet, die von der Seite aus in eine entsprechende, mit dem Bypasskanal kommunizierende Querbohrung einschraubbar ist. Alternativ kann die Drossel jedoch auch ein bekanntes elektromagnetisches Ventil umfassen, welches einen veränderbaren Durchgangsquerschnitt besitzt.

Nach einem weiteren der Erfindung zugrunde liegenden Gedanken sind die Ventile zusammen mit den hydraulischen Übergabeblöcken zwischen der Formplatte und dem Heißkanalverteiler angeordnet; und die Betätigungseinheiten befinden sich getrennt von den Ventilen auf der gegenüberliegenden Seite des Heißkanalverteilers zwischen dem Heißkanalverteiler und der Aufspannplatte. Bei dieser Ausführungsform erstrecken sich die Zu- und Rücklaufleitungen bevorzugt von jedem Ventil aus durch eine Öffnung im Heißkanalverteiler hindurch zu der jeweiligen Betätigungseinheit, wodurch kurze Leitungswege und damit verkürzte Betätigungszeiten für das Öffnen und Schließen der durch die Betätigungseinheiten vor- und zurückbewegten Verschlussnadeln in den Nadelverschlussdüsen erzielt werden.

Auch bei der zuletzt beschriebenen Ausführungsform der Erfindung sind die Zulauf- und Rücklaufleitungen zwischen den Ventilen und den Betätigungseinheiten vorzugsweise als eigensteife Metallröhrchen ausgestaltet, welche an ihrem ventilseitigen Ende einen Anschlussadapter aufweisen, auf welchen die zugehörige Betätigungseinheit bevorzugt über hydraulische Schnellkupplungen aufsteckbar ist. Auch bei dieser Ausführungsform hat es sich als besonderer Vorteil herausgestellt, wenn die Betätigungseinheiten jeweils auf einer mit den entsprechenden Verteilerbohrungen für den Zu- und Rücklauf des Druckfluids versehenen Adapterplatte angeordnet werden, welche die Betätigungseinheit trägt und vorzugsweise mittels eines zuvor beschriebenen Bypasskanals mit integrierter Strömungsdrossel fortlaufend gekühlt wird.

Um eine besonders kompakte Bauweise der erfindungsgemäßen Anordnung zu erhalten, können bei der zuletzt beschriebenen Ausführungsform die Ventile weiterhin an den hydraulischen Übergabeblöcken befestigt sein oder mit diesen eine Einheit bilden. Hierdurch lässt sich die Montagezeit in vorteilhafter Weise weiter verkürzen.

Gemäß einer alternativen Ausführungsform der Erfindung können die Übergabeblöcke zusammen mit den Ventilen und den Betätigungseinheiten sowie auch den Sammelleitungsabschnitten zwischen den Übergabeblöcken zur Bildung einer Zulauf- und Rücklaufsammelleitung für die Hydraulikflüssigkeit in einem gemeinsamen Zwischenraum zwischen dem Heißkanalverteiler und der Formplatte angeordnet sein.

Um bei den zuvor beschriebenen Ausführungsformen eine möglichst geradlinige Leitungsführung mit kurzen Leitungswegen zu erhalten, ist es gemäß der Erfindung vorgesehen, in Abhängigkeit von der Anordnung der Nadelverschlussdüsen an der Spritzgussform erste Übergabeblöcke einzusetzen, bei denen die beiden eingangsseiteigen und ausgangsseitigen Anschlusspunkte für die Zu- und Rücklauf-Sammelleitungsabschnitte auf einander gegenüberliegenden Außenwandflächen eines Übergabeblocks angeordnet sind, sodass sich eine geradlinige Durchflussrichtung des Druckfluids durch den Übergabeblock ergibt.

Die zuvor beschriebenen ersten Übergabeblöcke werden entweder allein oder zusammen mit zweiten Übergabeblöcke eingesetzt, bei denen die beiden eingangsseiteigen und ausgangsseitigen Anschlusspunkte für die Zu- und Rücklauf-Sammelleitungsabschnitte auf derselben Außenwandfläche des Übergabeblocks liegen, so dass an jedem Block der in den Übergabeblock eintretende Zulauf-Sammelleitungsabschnitt parallel zu dem aus dem Übergabeblock austretenden Zulauf-Sammelleitungsabschnitt für das zugeführte, unter Druck stehende Druckfluid in entgegengesetzter Richtung geführt ist. Das Entsprechende gilt für die in einen jeden Übergabeblock eintretenden und aus diesen austretenden Rücklauf-Sammelleitungsabschnitte.

Bei den zuerst beschriebenen ersten Übergabeblöcken können der Eingang und der Ausgang zum Anschluss der Zulauf-Sammelleitungsabschnitte für das den Betätigungseinheiten zugeführte Druckfluid beispielsweise über eine Durchgangsbohrung miteinander verbunden sein, von der aus die Zulaufleitung zu der jeweiligen Betätigungseinheit, bzw. dem elektrisch betätigten Ventil abzweigt. In entsprechender Weise kann der Eingang und der Ausgang zum Anschluss der Rücklauf-Sammelleitungsabschnitte an den Übergabeblock ebenfalls als versetzt zur ersten Durchgangsbohrung angeordnete zweite Durchgangsbohrung ausgestaltet sein, welche mit einer senkrecht zu dieser verlaufenden Bohrung kommuniziert, an die die Rücklaufleitung von der Betätigungseinheit zum Übergabeblock, bzw. vom Ventil zum Übergabeblock, angeschlossen ist.

Bei der zuletzt beschriebenen zweiten Ausführungsform der Übergabeblöcke können der Eingang und der Ausgang des Zulauf-Sammelleitungsabschnitts innerhalb des Übergabeblocks durch - eine im seitlichen Längsquerschnitt betrachtet - U-förmige Bohrung verbunden sein, die mit einer senkrecht zu den Zulauf-Sammelleitungsabschnitten verlaufenden Bohrung kommuniziert, an die die Zulaufleitung zu dem betreffenden Ventil, bzw. zur Betätigungseinheit angeschlossen ist. In entsprechender Weise kann der Eingang und der Ausgang zum Anschluss der Rücklauf-Sammelleitungsabschnitte an den Übergabeblock ebenfalls als eine versetzt zur ersten U-förmigen Bohrung angeordnete zweite U-förmige Bohrung ausgestaltet sein, die mit einer senkrecht zu den Rücklauf-Sammelleitungsabschnitten in den Übergabeblock eingebrachten Bohrung kommuniziert, an die die vom Ventil, bzw. der Betätigungseinheit kommende Rücklaufleitung für das Drucklfuid angeschlossen wird.

Die Erfindung wird nachfolgend mit Bezug auf die Zeichnungen anhand einer bevorzugten Ausführungsform der Anordnung beschrieben. In den Zeichnungen zeigen:
- Fig. 1: eine schematische ausschnittsweise Querschnittsdarstellung einer Kunststoffspritzgussmaschine mit einer erfindungsgemäßen Anordnung,
- Fig. 2a: eine schematische räumliche Aufsicht auf einen Heißkanalverteiler mit daran angeordneten Nadelverschlussdüsen, Betätigungseinheiten und erfindungsgemäßen Anschlussblöcken, die über eine hydraulische Ringleitung für den Zu- und Rücklauf miteinander verbunden sind,
- Fig. 2b: den Heißkanalverteiler von Fig. 2a von der Unterseite aus betrachtet,
- Fig. 3: eine erste Ausführungsform eines erfindungsgemäßen Übergabeblocks mit Betätigungseinheit und elektromagnetischem Ventil, bei dem die Anschlusspunkte für die Zulauf- und Rücklaufsammelleitungsabschnitte auf einander gegenüberliegenden Seitenflächen liegen, und
- Fig. 4: eine zweite Ausführungsform eines erfindungsgemäßen Übergabeblocks, bei welchem die Anschlusspunkte für die Zulauf- und Rücklaufsammelleitungsabschnitte gemeinsam auf einer Seitenfläche angeordnet sind.

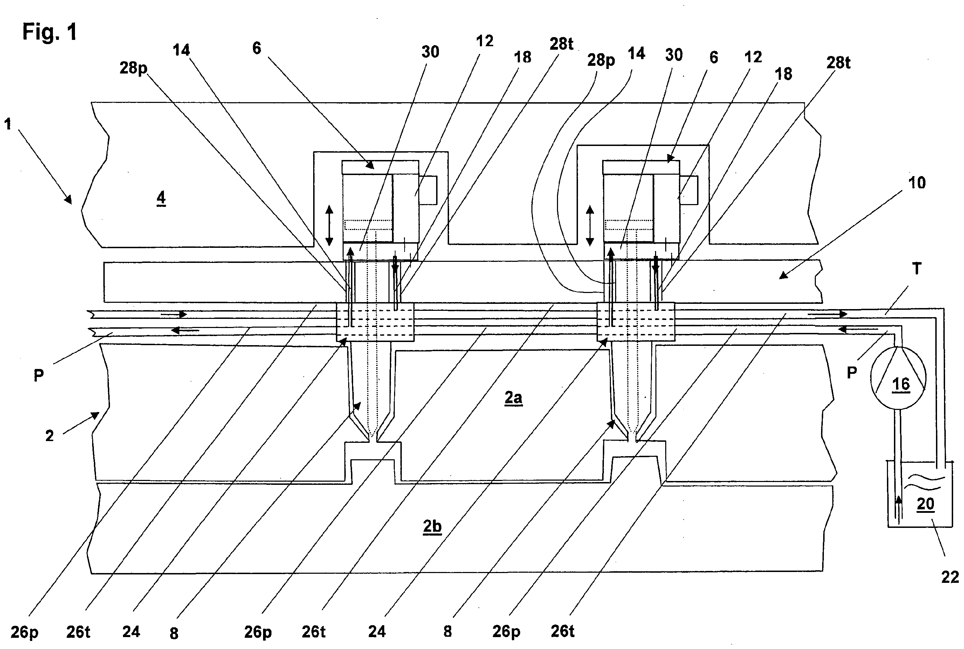

Wie in Fig. 1 gezeigt ist, umfasst eine Anordnung 1 zum Einspritzen von flüssigem Kunststoffmaterial in eine Spritzgussform 2 einer Kunststoffspritzgussmaschine eine Aufspannplatte 4, an der eine Vielzahl von durch jeweilige Betätigungseinheiten 6 hydraulisch betätigbaren Nadelverschlussdüsen 8 angeordnet ist, die das über einen nicht näher gezeigten Extruder über einen Einlass 10a zentral mit hohem Druck zugeführte Kunststoffmaterial in die Spritzgussform einspritzen. Die Spritzgussform 2a, 2b besteht hierbei in bekannter Weise aus einem gestellfesten Teil 2a, der nachfolgend auch als Formplatte 2 bezeichnet wird, sowie einem relativ zu diesem beweglichen Teil 2b, der beispielsweise durch Hydraulikzylinder von dem gestellsfesten Teil 2a weg bewegt oder an diesen angestellt werden kann, um ein in der Form hergestelltes Spritzgussteil nach dem Aushärten des Kunststoffmaterials zu entnehmen.

Um die Einspritzzeitpunkte der Nadelverschlussdüsen 8 zu steuern, ist jeder Betätigungseinheit 6 ein elektrisch über eine nicht näher gezeigte zentrale Steuerungseinrichtung betätigtes elektromagnetisches Mehrwegeventile 12 zugeordnet, welches über Zulaufleitungen 14 mit einer als Ringleitung ausgestalteten gemeinsamen Zulauf-Sammelleitung P mit einer Druckfluidquelle in Strömungsverbindung steht, die eine Pumpe 16 sowie einen Vorratsbehälter 20 für das Druckfluid 22 umfasst. Das über das jeweilige Ventil 12 einer Betätigungseinheit 6 zugeführte Druckfluid 22 fließt anschließend über eine Rücklaufleitung 18 und eine mit dieser in Strömungsverbindung stehende gemeinsame Rücklauf-Sammelleitung T in den Vorratsbehälter 20 zurück, aus dem es im Anschluss daran wieder von der Pumpe 16 entnommen wird, um dieses erneut über die Sammel-Zulaufleitung P zu den einzelnen Betätigungseinheiten 8 zu pumpen.

Bei der in den Figuren gezeigten bevorzugten Ausführungsform der Erfindung ist der Heißkanalverteiler 10 in einem in Fig. 1 angedeuteten, nicht näher bezeichneten Hohlraum zwischen der Aufspannplatte 4 und der die Spritzgussform 2a, 2b tragenden Formplatte 2 angeordnet. Demgegenüber befinden sich die hydraulischen Übergabeblöcke 24 zwischen der Formplatte 2 und dem Heißkanalverteiler 10; und die Betätigungseinheiten 6 mit den Ventilen 12 sind zwischen dem Heißkanalverteiler 10 und der Aufspannplatte 4 in entsprechenden Hohlräumen der Aufspannplatte 4 positioniert.

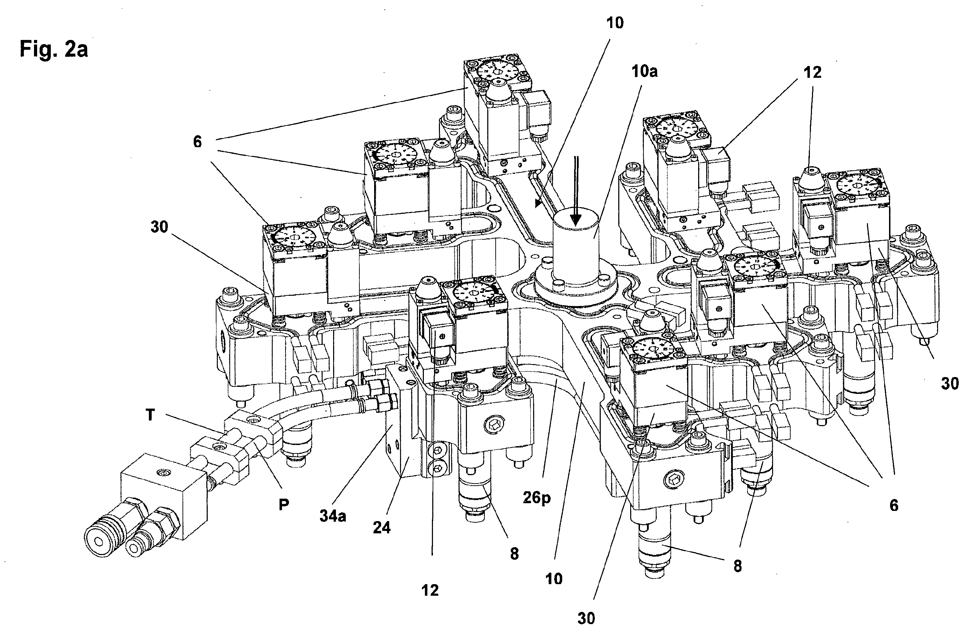

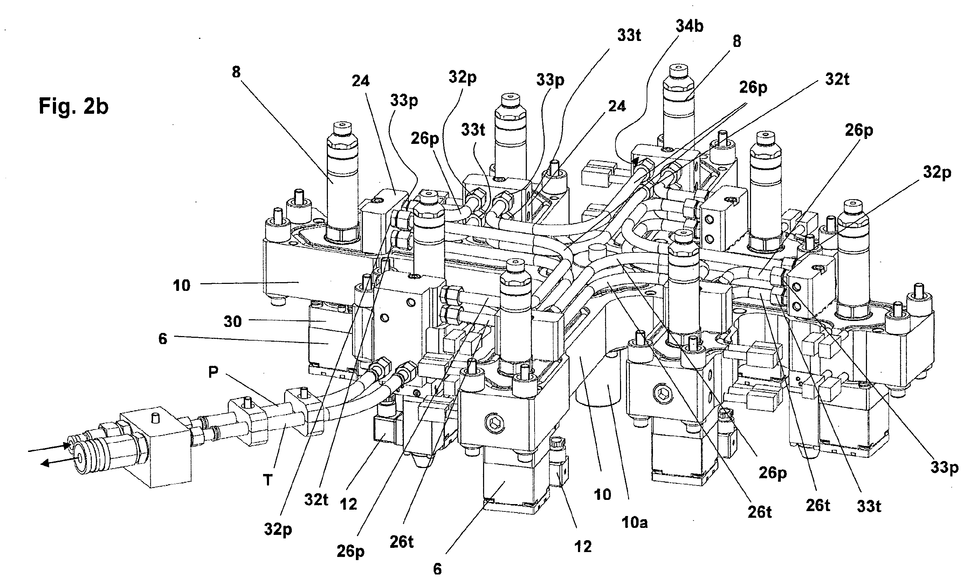

Wie weiterhin der Darstellung der Figuren 1, 2a und 2b entnommen werden kann, ist in der gemeinsamen Zulauf-Sammelleitung P und Rücklauf-Sammelleitung T eine der Anzahl der Betätigungseinheiten 6 entsprechende Anzahl von hydraulischen Übergabeblöcken 24 angeordnet die jeweils untereinander über sich zwischen den Übergabeblöcken 24 ersteckende, vorzugsweise parallel geführte flexible Zu- und Rücklaufsammelleitungsabschnitte 26p, 26t verbunden sind.

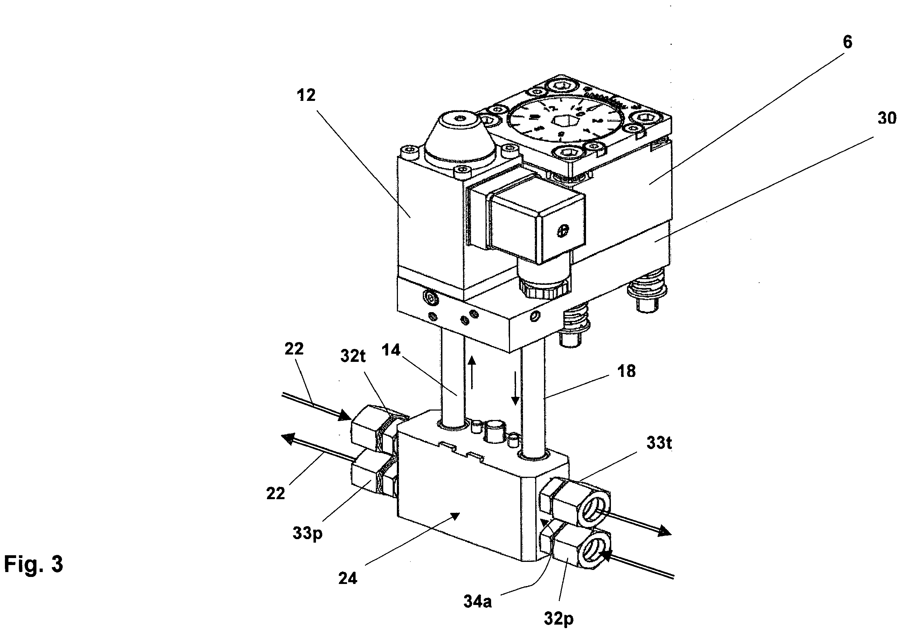

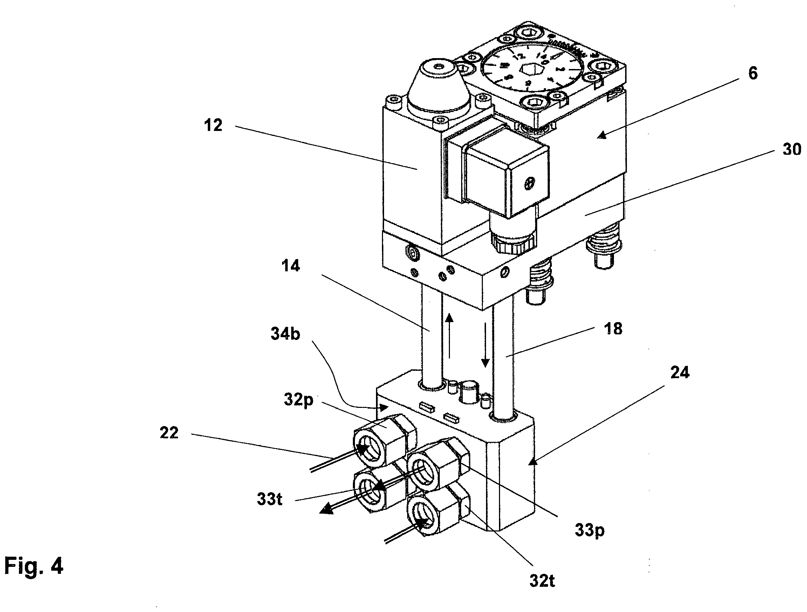

Wie aus der Darstellung der Fig. 1 weiterhin entnommen werden kann, erstrecken sich die Zu- und Rücklaufleitungen 14, 18 von jedem Ventil 12 aus bevorzugt durch eine Öffnung 28p, 28t im Heißkanalverteiler 10 hindurch zu dem jeweiligen hydraulischen Übergabeblock 24. Gemäß der Darstellung von Figur 3 und 4, in denen eine erste und eine zweite Ausführungsform eines hydraulischen Übergabeblocks 24 mit der zugehörigen Betätigungseinheit 6 gezeigt ist, sind die Zulauf- und Rücklaufleitungen 14, 18 zwischen den hydraulischen Übergabeblöcken 24 und den Ventilen 12, bzw. Betätigungseinheiten 6 als eigensteife Metallröhrchen ausgestaltet, die sich durch die Öffnungen 28p und 28t im Heißkanalverteiler 10 hindurch erstrecken und an ihrem ventilseitigen Ende einen nicht näher gezeigten Anschlussadapter aufweisen, auf welchen eine die Betätigungseinheit 6 und/oder das zugehörige Ventil 12 tragende Adapterplatte 30 aufsteckbar ist. In der Adapterplatte 30 sind nicht näher gezeigte Verteilerbohrungen angeordnet, über die die ebenfalls nicht näher gezeigten Eingänge und Ausgänge der Ventile 12 mit den Zu- und Rücklaufleitungen 14, 18 für das Druckfluid 22 strömungsmäßig verbunden sind.

Die in Fig. 3 gezeigte erste Ausführungsform der Übergabeblöcke 24, die in einer schematisierten Querschnittsansicht auch bei der in Fig. 1 gezeigten Ausführungsform zum Einsatz gelangen, werden dazu eingesetzt, die Betätigungseinheiten 6 von Nadelverschlussdüsen 8 an die Zulauf- und Rücklauf Sammelleitung P, T anzuschließen, die entlang einer Reihe, d.h. im Wesentlichen geradlinig, an der Formplatte 2 angeordnet sind, wie dies bei den Nadelverschlussdüsen 8 der Figur 1 der Fall ist. Bei dieser Ausführungsform der Übergabeblöcke 24 sind die eingangsseiteigen und ausgangsseitigen Anschlusspunkte 32p, 33p für die Zulauf-Sammelleitungsabschnitte 26p in gleicher Weise wie die eingangsseitigen und ausgangsseitigen Anschlusspunkte 32t, 33t für die Rücklauf-Sammelleitungsabschnitte 26t auf einander gegenüberliegenden Außenwandflächen 34a des Übergabeblocks 24 angeordnet.

Demgegenüber sind bei der in Fig. 4 im Detail gezeigten zweiten Ausführungsform der erfindungsgemäßen Übergabeblöcke 24, die ausnahmslos bei der in den Figuren 2a und 2b gezeigten beispielhaften Darstellung eines Heißkanalverteilers 10 zum Einsatz gelangen, die eingangsseiteigen Anschlusspunkte 32p, 32t sowie auch die ausgangsseitigen Anschlusspunkte 33p, 33t für die Zu- und Rücklauf-Sammelleitungsabschnitte 26p, 26t auf derselben Außenwandfläche 34b des Übergabeblocks 24 angeordnet. Hierdurch erfolgt ein Richtungswechsel des zu- und abgeführten Druckfluid 22 in den parallel zueinander verlaufenden Zu- und Rücklauf-Sammelleitungsabschnitten 26p, 26t um 180°. Es versteht sich, dass die ersten und zweiten Übergabeblöcke 24 auch zusammen eingesetzt werden können, um den Verlauf der Leitungsführung, insbesondere die Länge der Leitungswege, bei einer vorgegebenen Anordnung der Nadelverschlussdüsen 8 zu optimieren.

### Liste der Bezugszeichen

- 1: erfindungsgemäße Anordnung
- 2: Formplatte
- 2a: fester Teil der Spritzgussform
- 2b: beweglicher Teil der Spritzgussform
- 4: Aufspannplatte
- 6: Betätigungseinheit
- 8: Nadelverschlussdüse
- 10: Heißkanalverteiler
- 10a: Eintrittsöffnung für Schmelzgut in Heißkanalverteiler
- 12: Ventile
- 14: Zulaufleitung
- 16: Druckfluidquelle
- 18: Rücklaufleitung
- 20: Vorratsbehälter für das Druckfluid
- 22: Druckfluid
- 24: Übergabeblock
- 26p: Zulauf-Sammelleitungsabschnitte
- 26t: Rücklauf-Sammelleitungsabschnitte
- 28p: Öffnung für Zulaufleitung in Heißkanalverteiler
- 28t: Öffnung für Rücklaufleitung in Heißkanalverteiler
- 30: Adapterplatte
- 32p: eingangsseitiger Anschlusspunkt für Zulauf
- 32t: eingangsseitiger Anschlusspunkt für Rücklauf
- 33p: ausgangsseitiger Anschlusspunkte für Zulauf
- 33t: ausgangsseitiger Anschlusspunkte für Rücklauf
- 34a: gegenüberliegende Außenwandflächen der ersten Übergabeblöcke
- 34b: Außenwandfläche der zweiten Übergabeblöcke
- P: Zulauf-Sammelleitung
- T: Rücklauf-Sammelleitung

## Patentansprüche

1. Anordnung (1) zum Einspritzen von flüssigem Kunststoffmaterial in eine Spritzgussform (2a, 2b) einer Kunststoffspritzgussmaschine umfassend eine Aufspannplatte (4), an der eine Vielzahl von durch jeweilige Betätigungseinheiten (6) hydraulisch betätigbaren Nadelverschlussdüsen (8) angeordnet sind, die zum Einspritzen von dem in einem Heißkanalverteiler (10) geführten flüssigen Kunststoffmaterial in die Spritzgussform (2a, 2b) jeweils über zugeordnete Ventile (12) betätigbar sind, wobei die Zulaufleitungen (14) der Ventile (12) über eine gemeinsame Zulauf-Sammelleitung (P) mit einer Druckfluidquelle (16) und die Rücklaufleitungen (18) der Ventile (12) über eine gemeinsame Rücklauf-Sammelleitung (T) mit einem Vorratsbehälter (20) für das Druckfluid verbunden sind und die gemeinsame Zulauf-Sammelleitung (P) und Rücklauf-Sammelleitung (T) eine der Anzahl der Betätigungseinheiten (6) entsprechende Anzahl von hydraulischen Übergabeblöcken (24) enthält, die jeweils untereinander über sich zwischen den Übergabeblöcken (24) ersteckende Zu- und Rücklauf-Sammelleitungsabschnitte (26p, 26t) verbunden sind
**dadurch gekennzeichnet,**
**dass** der Heißkanalverteiler (10) in einem Hohlraum zwischen der Aufspannplatte (4) und einer die Spritzgussform (2a, 2b) tragenden Formplatte (2) angeordnet ist, und dass die hydraulischen Übergabeblöcke (24) zwischen der Formplatte (2) und dem Heißkanalverteiler (10) und die Betätigungseinheiten (6) zwischen dem Heißkanalverteiler (10) und der Aufspannplatte (4) positioniert sind, oder dass der Heißkanalverteiler (10) in einem Hohlraum zwischen der Aufspannplatte (4) und einer die Spritzgussform (2a, 2b) tragenden Formplatte (2) angeordnet ist und dass die hydraulischen Übergabeblöcke (24) zusammen mit den Ventilen (12) und den Betätigungseinheiten (6) in einem Zwischenraum zwischen dem Heißkanalverteiler (10) und der Formplatte (2) angeordnet sind.

2. Anordnung nach Anspruch 1,
**dadurch gekennzeichnet,**
**dass** die Ventile (12) zusammen mit den Betätigungseinheiten (6) zwischen dem Heißkanalverteiler (10) und der Aufspannplatte (4) angeordnet sind, und dass sich die Zu- und Rücklaufleitungen (14, 18) von jedem Ventil (12) aus bevorzugt durch eine Öffnung (28p, 28t) im Heißkanalverteiler (10) hindurch zu dem jeweiligen hydraulischen Übergabeblock (24) erstrecken.

3. Anordnung nach Anspruch 2,
**dadurch gekennzeichnet,**
**dass** die Zulauf- und Rücklaufleitungen (14, 18) zwischen den hydraulischen Übergabeblöcken (24) und den Ventilen (12) oder Betätigungseinheiten (6) eigensteife Metallröhrchen umfassen, welche an ihrem ventilseitigen Ende einen Anschlussadapter aufweisen, auf welchen eine die Betätigungseinheit (6) und/oder das zugehörige Ventil (12) tragende Adapterplatte (30) mit Verteilerbohrungen für den Zu- und Rücklauf des Druckfluids (22) zur Betätigungseinheit (6) vorzugsweise aufsteckbar ist.

4. Anordnung nach Anspruch 3,
**dadurch gekennzeichnet,**
**dass** die Adapterplatte (30) einen die Zu- und Rücklaufleitung (14, 18) direkt miteinander verbindenden Bypasskanal besitzt, dessen Strömungsquerschnitt für das hindurchströmende, insbesondere gekühlte Druckfluid, durch eine einstellbare Strömungsdrossel veränderbar ist.

5. Anordnung nach Anspruch 1,
**dadurch gekennzeichnet,**
**dass** die Ventile (12) zusammen mit den hydraulischen Übergabeblöcken (24) zwischen der Formplatte (2) und dem Heißkanalverteiler (10), und die Betätigungseinheiten (6) zwischen dem Heißkanalverteiler (10) und der Aufspannplatte (4) angeordnet sind, und dass sich die Zu- und Rücklaufleitungen (14, 18) von jedem Ventil (12) aus durch eine Öffnung (28p, 28t) im Heißkanalverteiler (10) hindurch zu der jeweiligen Betätigungseinheit (6) erstecken.

6. Anordnung nach Anspruch 5,
**dadurch gekennzeichnet,**
**dass** die Zulauf- und Rücklaufleitungen (14, 18) zwischen den Ventilen (12) und den Betätigungseinheiten (6) eigensteife Metallröhrchen sind, welche an ihrem ventilseitigen Ende einen Anschlussadapter aufweisen, auf welchen die zugehörige Betätigungseinheit (6) oder eine mit Verteilerbohrungen für den Zu- und Rücklauf des Druckfluids (22) zur Betätigungseinheit (6) versehene Adapterplatte (30) vorzugsweise aufsteckbar ist, welche die Betätigungseinheit (6) trägt.

7. Anordnung nach Anspruch 5 oder 6,
**dadurch gekennzeichnet,**
**dass** die Ventile an den hydraulischen Übergabeblöcken (24) befestigt sind, und/oder mit diesen eine Einheit bilden.

8. Anordnung nach einem der vorhergehenden Ansprüche,
**dadurch gekennzeichnet,**
**dass** die hydraulischen Übergabeblöcke (24) erste Übergabeblöcke (24) umfassen, bei denen die beiden eingangsseiteigen und ausgangsseitigen Anschlusspunkte (32p, 32t; 33p, 33t) für die Zu- und Rücklauf-Sammelleitungsabschnitte (26p, 26t) auf einander gegenüberliegenden Außenwandflächen (34a) des Übergabeblocks (24) angeordnet sind, und/oder zweite Übergabeblöcke (24) umfassen, bei denen die beiden eingangsseiteigen und ausgangsseitigen Anschlusspunkte (32p, 32t; 33p, 33t) für die Zu- und Rücklauf-Sammelleitungsabschnitte (26p, 26t) auf derselben Außenwandfläche (34b) des Übergabeblocks (24) angeordnet sind.

## Claims

1. Arrangement (1) for injecting liquid plastic material into an injection mould (2a, 2b) of a plastics injection-moulding machine comprising a clamping plate (4), on which there is arranged a plurality of needle valve nozzles (8), which are hydraulically actuatable by respective actuation units (6) and which are actuatable for injection of liquid plastic material, guided in a hot runner distributor (10), into the injection mould (2a, 2b), in each case via associated valves (12), wherein the feed lines (14) of the valves (12) are connected via a common feed collection line (P) to a pressurised fluid source (16) and the return lines (18) of the valves are connected via a common return collection line (T) to a storage vessel (20) for the pressurised fluid, and the common feed collection line (P) and return collection line (T) contains a number of hydraulic transfer blocks (24) corresponding to the number of actuation units (6), which transfer blocks are connected to one another in each case via feed and return collection line portions (26p, 26t) extending between the transfer blocks (24),
**characterised in that**
the hot runner distributor (10) is arranged in a cavity between the clamping plate (4) and a mould plate (2) supporting the injection mould (2a, 2b), and **in that** the hydraulic transfer blocks (24) are positioned between the mould plate (2) and the hot runner distributor (10), and the actuation units (6) are positioned between the hot runner distributor (10) and the clamping plate (4), or **in that** the hot runner distributor (10) is arranged in a cavity between the clamping plate (4) and a mould plate (2) supporting the injection mould (2a, 2b), and **in that** the hydraulic transfer blocks (24) together with the valves (12) and the actuation units (6) are arranged in a gap between the hot runner distributor (10) and the mould plate (2).

2. Arrangement according to claim 1,
**characterised in that**
the valves (12) together with the actuation units (6) are arranged between the hot runner distributor (10) and the clamping plate (4), and **in that** the feed and return lines (14, 18) extend from each valve (12) preferably through an opening (28p, 28t) in the hot runner distributor (10) to the respective hydraulic transfer block (24).

3. Arrangement according to claim 2,
**characterised in that**
the feed and return lines (14, 18) between the hydraulic transfer blocks (24) and the valves (12) or actuation units (6) comprise inherently rigid metal tubes, which have a connection adapter at their valve-side end, onto which adapter an adapter plate (30) supporting the actuation unit (6) and/or the associated valve (12) and having distributor bores for the feed and return of the pressurised fluid (22) to the actuation unit (6) preferably can be fitted.

4. Arrangement according to claim 3,
**characterised in that**
the adapter plate (30) has a bypass channel directly connecting the feed and return line (14, 18) to one another, the flow cross-section of the bypass channel for the, in particular cooled, pressurised fluid flowing through being variable by means of an adjustable flow throttle.

5. Arrangement according to claim 1,
**characterised in that**
the valves (12) together with the hydraulic transfer blocks (24) are arranged between the mould plate (2) and the hot runner distributor (10), and the actuation units (6) are arranged between the hot runner distributor (10) and the clamping plate (4), and **in that** the feed and return lines (14, 18) extend from each valve (12) through an opening (28p, 28t) in the hot runner distributor (10) to the respective actuation unit (6) .

6. Arrangement according to claim 5,
**characterised in that**
the feed and return lines (14, 18) between the valves (12) and the actuation units (6) are inherently rigid metal tubes, which have a connection adapter at their valve-side end, onto which connection adapter the associated actuation unit (6) or an adapter plate (30) provided with distributor bores for the feed and return of the pressurised fluid (22) to the actuation unit (6) and supporting the actuation unit (6) preferably can be fitted.

7. Arrangement according to claim 5 or 6,
**characterised in that**
the valves are secured to the hydraulic transfer blocks (24) and/or form a unit together therewith.

8. Arrangement according to any one of the preceding claims,
**characterised in that**
the hydraulic transfer blocks (24) comprise first transfer blocks (24), in which the two input-side and output-side connection points (32p, 32t; 33p, 33t) for the feed and return collection line portions (26p, 26t) are arranged on mutually opposed outer wall faces (34a) of the transfer block (24), and/or comprise second transfer blocks (24), in which the two input-side and output-side connection points (32p, 32t; 33p, 33t) for the feed and return collection line portions (26p, 26t) are arranged on the same outer wall face (34b) of the transfer block (24).

## Revendications

1. Agencement (1) destiné à l'injection d'une matière synthétique liquide dans un moule de moulage par injection (2a, 2b) d'une machine de moulage par injection d'une matière synthétique, comprenant une plaque de serrage (4) contre laquelle sont disposées un certain nombre de buses d'obturation à aiguille (8) qui peuvent être actionnées par voie hydraulique par l'intermédiaire d'unités d'activation respectives (6), qui peuvent être activées pour l'injection de la matière synthétique liquide guidée dans un distributeur du type à canaux chauds (10), dans le moule de moulage par injection (2a, 2b) respectivement par l'intermédiaire de soupapes (12) qui leur sont attribuées ; dans lequel les conduits d'alimentation (14) des soupapes (12) sont reliés, par l'intermédiaire d'une conduite collectrice d'alimentation commune (P), à une source de fluide sous pression (16), et les conduits de retour (18) des soupapes (12) sont reliés, par l'intermédiaire d'une conduite collectrice de retour commune (T), à un récipient de réserve (20) pour le fluide sous pression, et la conduite collectrice d'alimentation commune (P) ainsi que la conduite collectrice de retour commune (T) contiennent un nombre, correspondant au nombre des unités d'activation (6), de blocs de transfert hydrauliques (24) qui sont reliés respectivement les uns aux autres par l'intermédiaire de tronçons des conduites collectrices d'alimentation et de retour (26p, 26t) s'étendant entre les blocs de transfert (24),
**caractérisé en ce que** le distributeur du type à canaux chauds (10) est disposé dans un espace vide entre la plaque de serrage (4) et une plaque de moulage (2) qui supporte le moule de moulage par injection (2a, 2b), et **en ce que** les blocs de transfert hydrauliques (24) sont disposés entre la plaque de moulage (2) et le distributeur du type à canaux chauds (10) et les unités d'activation (6) sont disposées entre le distributeur du type à canaux chauds (10) et la plaque de serrage (4) ou bien **en ce que** le distributeur du type à canaux chauds (10) est disposé dans un espace vide entre la plaque de serrage (4) et une plaque de moulage (2) qui supporte le moule de moulage par injection (2a, 2b) et **en ce que** les blocs de transfert hydrauliques (24) sont disposés de manière conjointe avec les soupapes (12) et avec les unités d'activation (6) dans un espace intermédiaire ménagé entre le distributeur du type à canaux chauds (10) et la plaque de moulage (2).

2. Agencement selon la revendication 1, **caractérisé en ce que** les soupapes (12) sont disposées, de manière conjointe avec les unités d'activation (6), entre le distributeur du type à canaux chauds (10) et la plaque de serrage (4), et **en ce que** les conduits d'alimentation et de retour (14, 18) s'étendent à partir de chaque soupape (12), de préférence à travers une ouverture (28p, 28t) pratiquée dans le distributeur du type à canaux chauds (10) en direction du bloc de transfert hydraulique respectif (24).

3. Agencement selon la revendication 2, **caractérisé en ce que** les conduits d'alimentation et de retour (14, 18) comprennent des tubes métalliques dotés d'une rigidité intrinsèque entre les blocs de transfert hydrauliques (24) et les soupapes (12) ou les unités d'activation (6), qui présentent, à leur extrémité côté soupapes, un adaptateur de raccordement sur lequel peut de préférence venir s'enficher une plaque (30) faisant office d'adaptateur qui supporte l'unité d'activation (6) et/ou la soupape associée (12), comprenant des alésages de distribution pour l'alimentation et le retour du fluide sous pression (22) en direction de l'unité d'activation (6).

4. Agencement selon la revendication 3, **caractérisé en ce que** la plaque (30) faisant office d'adaptateur possède un canal de dérivation reliant directement l'un à l'autre le conduit d'alimentation et le conduit de retour (14, 18), dont la section transversale d'écoulement peut être modifiée pour le fluide sous pression en particulier refroidi, qui le traverse, via un étrangleur de l'écoulement qui peut être réglé.

5. Agencement selon la revendication 1, **caractérisé en ce que** les soupapes (12), de manière conjointe avec les blocs de transfert hydrauliques (24), sont disposées entre la plaque de moulage (2) et le distributeur du type à canaux chauds (10), et les unités d'activation (6) sont disposées entre le distributeur du type à canaux chauds (10) et la plaque de serrage (4), et **en ce que** les conduits d'alimentation et de retour (14, 18) s'étendent à partir de chaque soupape (12), à travers une ouverture (28p, 28t) pratiquée dans le distributeur du type à canaux chauds (10) en direction de l'unité d'activation respective (6).

6. Agencement selon la revendication 5, **caractérisé en ce que** les conduits d'alimentation et de retour (14, 18) représentent des tubes métalliques dotés d'une rigidité intrinsèque entre les soupapes (12) et les unités d'activation (6) qui présentent, à leur extrémité côté soupapes, un adaptateur de raccordement sur lequel peut de préférence venir s'enficher l'unité d'activation associée (6) ou une plaque (30) faisant office d'adaptateur munie d'alésages de distribution destinés à l'alimentation et au retour du fluide sous pression (22) en direction de l'unité d'activation (6), qui supporte l'unité d'activation (6).

7. Agencement selon la revendication 5 ou 6, **caractérisé en ce que** les soupapes sont fixées aux blocs de transfert hydrauliques (24) et/ou sont réalisées en une seule pièce avec ces derniers.

8. Agencement selon l'une quelconque des revendications précédentes,
**caractérisé en ce que** les blocs de transfert hydrauliques (24) comprennent des premiers blocs de transfert (24), dans lesquels les deux points de raccordement du côté entrée et du côté sortie (32p, 32t ; 33p, 33t) pour les tronçons de conduites collectrices d'alimentation et de retour (26p, 26t) sont disposés sur des surfaces de parois externes (34a) du bloc de transfert (24), opposées l'une à l'autre, et/ou des deuxièmes blocs de transfert (24) dans lesquels les deux points de raccordement du côté entrée et du côté sortie (32p, 32t ; 33p, 33t) pour les tronçons de conduites collectrices d'alimentation et de retour (26p, 26t) sont disposés sur la même surface de paroi externe (34b) du bloc de transfert (24).
